# EUROPÄISCHE PATENTSCHRIFT

(11) **EP 2 931 586 B1**
(45) Veröffentlichungstag und Bekanntmachung des Hinweises auf die Patenterteilung: **24.05.2017**
(21) Anmeldenummer: 13779595.1
(22) Anmeldetag: 22.10.2013
(51) Int. Cl.: B62D 15/02, B60W 30/06, G05D 1/02

(54) **VERFAHREN UND FAHRASSISTENZSYSTEM ZUR UNTERSTÜTZUNG EINES FAHRERS BEI EINEM FAHRMANÖVER**
METHOD AND TRAVEL ASSISTANCE SYSTEM FOR SUPPORTING A DRIVER BY A DRIVE MANEUVER
PROCÉDÉ ET SYSTÈME D'ASSISTANCE DE CONDUITE POUR L'ASSISTANCE À UN CONDUCTEUR DANS UNE MANOEUVRE DE CONDUITE

(30) Priorität: 13.12.2012 DE 102012223057
(43) Veröffentlichungstag der Anmeldung: 21.10.2015
(73) Patentinhaber: Robert Bosch GmbH, 70442 Stuttgart (DE)
(72) Erfinder: HEIGELE, Christian, 70435 Stuttgart (DE); MIELENZ, Holger, 73760 Ostfildern (DE)
(86) Internationale Anmeldenummer: PCT/EP2013/072003
(87) Internationale Veröffentlichungsnummer: WO 2014/090463

(56) Entgegenhaltungen:
- EP-A1- 1 775 690
- US-A1- 2012 056 758
- US-B1- 7 538 690

## Beschreibung

### Stand der Technik

Die Erfindung geht aus von einem Verfahren zur Unterstützung eines Fahrers eines Kraftfahrzeugs bei einem Fahrmanöver, umfassend zum Beispiel die Unterstützung des Fahrers zu notwendigen Lenkeinstellungen und zur Längsführung, um das Fahrmanöver durchzuführen. Fahrmanöver, bei denen der Fahrer unterstützt wird, sind zum Beispiel Einparkvorgänge, insbesondere Einparkvorgänge in Längsparklücken, Querparklücken oder allgemein in Parkflächen, die durch Fahrzeuge oder andere Objekte begrenzt sind. Um die Verfahren durchzuführen, werden üblicherweise sogenannte Fahrassistenzsysteme eingesetzt. Um das Verfahren jeweils zu starten, wird dem Fahrer vom Fahrassistenzsystem ein Fahrmanöver angeboten. Hierzu aktiviert der Fahrer das System zunächst und bekommt anschließend einen unterschiedlichen Grad an Unterstützung durch das System bezüglich der Längs- und Querführung angeboten, um das Fahrzeug zum Beispiel in eine vom Fahrer ausgewählte Parklücke abzustellen. Bei einfachen Systemen erhält der Fahrer lediglich Hinweise zum Abstand zu Objekten, die in der Umgebung des Fahrzeugs sind, um auf diese Weise Kollisionen mit diesen Objekten zu vermeiden. Weiter fortgeschrittene Systeme berechnen eine geeignete Einparkbahn, eine sogenannte Trajektorie, in eine Parklücke und geben dem Fahrer Lenkhinweise, um entlang der Trajektorie in die Parklücke einzuparken. Neben den Hinweisen für die Lenkführung ist es weiterhin auch bekannt, dass die Lenkung vom System übernommen wird und dem Fahrer nur noch die Längsführung obliegt, das heißt, er das Fahrzeug nur noch beschleunigen muss, bremsen muss oder die Geschwindigkeit halten muss. Weiterhin sind auch vollautomatische Systeme bekannt, bei denen der gesamte Einparkvorgang inklusive Längsführung durch das Fahrsystem durchgeführt wird.

Die DE 10 2010 030 208 A1 zeigt ein derartiges Verfahren, welches außerdem Standardfahrmanöver bereitstellt, die durch den Fahrer aktiviert werden können. Ein Standardmanöver kann durch Abspeichern einer zuvor gefahrenen Trajektorie realisiert werden. US753 86 90 B1 offenbart ein Verfahren nach dem Oberbegriff des Anspruchs 1.

### Offenbarung der Erfindung

Beim erfindungsgemäßen Verfahren wird vom Fahrassistenzsystem eine Trajektorie bereitgestellt, die das Fahrassistenzsystem mittels einer Kommunikationseinheit von einer vom Ego-Fahrzeug unabhängigen Einheit empfängt.

Die Trajektorie wird von der unabhängigen Einheit an das Fahrassistenzsystem des Ego-Fahrzeugs kommuniziert. Die unabhängige Einheit weist hierzu eine geeignete Kommunikationseinheit auf. Die unabhängige Einheit kann sich im Allgemeinen außerhalb des Fahrzeugs befinden und als ein Ego-Fahrzeug-externes System bezeichnet werden, d.h. ein System, das fahrzeugextern angeordnet ist oder zumindest fahrzeugextern anordenbar, bzw. fahrzeugextern anordnungsfähig ist. Es kann vorgesehen sein, dass die unabhängige Einheit mit dem Ego-Fahrzeug lediglich zu diesem Zweck in Kommunikationsverbindung treten kann.

Insbesondere eignet sich das Verfahren zum Einsatz bei der Planung von Trajektorien bei Einpark- oder Ausparkmanövern, sowie Engstellenmanövern.

Das Verfahren wird besonders vorteilhaft in Werkstätten eingesetzt, wo regelmäßig Fahrzeuge unterschiedlicher Fahrzeugtypen auf einer stets wiederkehrenden Strecke fahren müssen. In Werkstätten müssen Fahrzeuge beispielsweise immer auf bestimmte Hebebühnen gefahren werden. Durch ein einmaliges Einfahren der Trajektorie, beispielsweise vom Unternehmensparkplatz zur Hebebühne, können im Folgenden die Fahrzeuge, die diese Funktion unterstützen, sicherer und ohne größeren Aufwand zu der gewünschten Zielposition auf der Hebebühne geführt werden.

Ebenso lässt sich das Verfahren vorteilhaft bei Fertigungshallen einsetzen, wenn ständig Fahrzeuge von einem bestimmten Ort der Montage zu einem anderen bestimmten Ort verbracht werden müssen, beispielsweise an einen Hallenausgang. Auch ist das Verfahren vorteilhaft einsetzbar in Parkhäusern, welche Ladestationen für so genannte E-Mobilität betreiben. Besitzt ein Parkhaus eine begrenzte Anzahl von Ladestationen, kann der Betreiber es dem Kunden so ermöglichen, sein Fahrzeug auf einem Parkplatz abzustellen, und das Fahrzeug zu einer Ladestation zu führen, sobald eine frei ist. Anschließend wird das Fahrzeug wieder auf dem gewählten Parkplatz abgestellt. Ein Einsatz ist unter diesen Umständen auch an Tankstellen vorstellbar, um an die Zapfsäule zu gelangen und an Supermärkten, um auf bestimmte Parkplätze zu gelangen.

Ein weiterer Vorteil ergibt sich bei Drive-In-Schaltern, bei welchen eine Führung des Fahrzeugs entlang einer seitlich begrenzten Fahrbahn notwendig ist. Hierdurch kann ermöglicht werden, dass sich das Fahrzeug auf einfache Weise möglichst dicht an bestimmte Objekte heranbewegt, sodass die notwendigen Aktionen vom Fahrer auf einfache Weise durchgeführt werden können, beispielsweise die Bestellung, die Bezahlung oder der Empfang der Ware.

Ebenso vorteilhaft ist das System in Parkhäusern einsetzbar, bei denen das Fahrzeug möglichst dicht an bestimmte Objekte herangeführt werden muss, beispielsweise um einen Parkschein anzufordern oder abzugeben.

Auch bei Familien, die mehrere Fahrzeuge besitzen, muss durch die Übertragbarkeit der Trajektorien nicht für alle ihre Fahrzeuge dieselbe Trajektorie eingefahren werden, sondern es kann beispielsweise für die Einfahrt in die Heimgarage oder auf einen Heimparkplatz eine einmalig eingefahrene Trajektorie gleichzeitig für alle Fahrzeuge verwendet werden.

Durch die in den abhängigen Ansprüchen aufgeführten Maßnahmen sind vorteilhafte Weiterbildungen und Verbesserungen des im unabhängigen Anspruch angegebenen Verfahrens möglich.

Nach einer Ausführungsform wird die Trajektorie von einem Fahrassistenzsystem eines aufzeichnenden Fahrzeugs in einem Speicher abgelegt. Die Aufzeichnung erfolgt durch die Bewegung auf einer Fahrstrecke. Vorteilhaft wird die durch das Fahrzeug abgespeicherte Trajektorie für weitere Kraftfahrzeuge, nämlich insbesondere für das Ego-Fahrzeug nutzbar gemacht.

Das aufzeichnende Fahrzeug kann dazu eingerichtet sein, die in dem Speicher abgelegte Trajektorie wieder auszulesen und diese als unabhängige Einheit dem Ego-Fahrzeug zu kommunizieren. Alternativ hierzu kann vorgesehen sein, dass die in dem Speicher abgelegte Trajektorie von einem Mediator ausgelesen wird und von diesem als unabhängige Einheit dem Ego-Fahrzeug bereitgestellt wird, beispielsweise von einem tragbaren Gerät, wie etwa einem Smartphone.

Nach einer Ausführungsform wird die Trajektorie mit fahrzeugspezifischen Parametern des aufzeichnenden Fahrzeugs, insbesondere mit Angaben zu einem Radstand, zu dem Wendekreis und/oder einer Fahrzeugkontur des aufzeichnenden Fahrzeugs in dem Speicher abgelegt. Vorteilhaft speichert das erfindungsgemäße System somit zusätzlich zu einer durch den Fahrer eingefahrenen Trajektorie auch für das betreffende Manöver relevante Fahrzeugparameter des aufzeichnenden Fahrzeugs ab. Zu den relevanten Fahrzeugparametern können auch kinematische Grenzparameter und Referenzpunkte des aufzeichnenden Fahrzeugs zählen, zum Beispiel, welcher Ort am aufzeichnenden Fahrzeug zur Aufzeichnung der Trajektorie verwendet wurde. Aus diesen Angaben kann das aufzeichnende Fahrzeug und/oder das Fahrassistenzsystem des Ego-Fahrzeugs insbesondere eine vom aufzeichnenden Fahrzeug überstrichene Fläche ermitteln, d.h. einen so genannten Fahrschlauch.

In einer weiteren Ausführungsform wird die durch das aufzeichnende Fahrzeug abgespeicherte Trajektorie auf der überstrichenen Fläche optimiert abgespeichert, sodass die Anzahl an Wendepunkten minimiert wird. Hierdurch wird erreicht, dass der Fahrer des Ego-Fahrzeugs auf einer Trajektorie geführt wird, die möglichst komfortabel ist, d.h. wenige Lenkeinschlagänderungen von links auf rechts verwendet. Die Trajektorie wird außerdem bevorzugt als Polygonzug abgespeichert, um Speicherplatz einzusparen.

Nach einer bevorzugten Ausführungsform ermittelt das aufzeichnende Fahrzeug einen überstreichbaren Bereich. Vorteilhaft werden damit gegebenenfalls vorhandene Umfeldsensoren auf dem aufzeichnenden Fahrzeug dazu eingesetzt, die durch das Fahrzeug während der Aufzeichnung der Trajektorie ermittelte überstrichene Fläche in einen für das Fahrzeug überstreichbaren Bereich zu überführen. Die Umgebung wird dabei nach befahrbaren Flächen analysiert und diese abgespeichert. Bevorzugt erfolgt die Speicherung des überstreichbaren Bereichs ebenfalls wie die Speicherung des Fahrschlauchs, d.h. der überstrichenen Fläche, in Form von Polygonzügen.

Nach einer Ausführungsform wird in dem Fall, wenn eine Inkompatibilität der empfangenen Trajektorie mit fahrzeugspezifischen Parametern des Ego-Fahrzeugs ermittelt wird, vom Fahrassistenzsystem des Ego-Fahrzeugs eine alternative Trajektorie ermittelt und bereitgestellt. Steht also dem Ego-Fahrzeug die erstellte Repräsentation der eingefahrenen Trajektorie zur Verfügung, wird auf Basis der fahrzeugspezifischen Parameter des Ego-Fahrzeugs geprüft, z.B. auf Basis der ebenfalls übermittelten befahrbaren Fläche oder aber während der Unterstützung durch aktuelle Daten von Umfeldsensoren (online Umfeldsensoren), ob das Ego-Fahrzeug das Fahrmanöver des aufzeichnenden Fahrzeugs umsetzen kann. Beispielsweise wird geprüft, ob in Abhängigkeit des Randstandes und/oder des Wendekreises der übermittelte Trajektorienverlauf verfolgt werden kann. Ebenfalls wird auf einer solchen Trajektorie geprüft, ob sich mit der bekannten Kontur des Ego-Fahrzeugs eine überstrichene Fläche ergibt, die deutlich von derjenigen des aufzeichnenden Fahrzeugs abweicht. Für den Fall, dass die Trajektorie des aufzeichnenden Fahrzeugs mit fahrzeugspezifischen Parametern übergeben wurde, kann die Berechnung der überstrichenen Fläche des aufzeichnenden Fahrzeugs auf dem Ego-Fahrzeug durchgeführt werden.

Sollte eine Abweichung vorliegen, wird die empfangene Trajektorie derart optimiert, dass die überstrichenen Flächen des aufzeichnenden und des Ego-Fahrzeugs möglichst geringe Abweichungen voneinander haben. Sollten Abweichungen aufgrund zu stark divergierender Fahrzeugparameter zwischen den an der Kommunikation beteiligten Fahrzeugen nicht vermieden werden können, wird eine Optimierungsstrategie für die Bestimmung der Trajektorie des Ego-Fahrzeugs bevorzugt in der Art gewählt, dass Abweichungen in den überstrichenen Flächen nur bei solchen Abschnitten der Trajektorie auftreten, die durch eventuell vorhandene Umfeldsensoren oder durch den Fahrer direkt einsehbar sind. Vorzugsweise liegen diese Abweichungen also vor dem Heck oder vor der Fahrzeugfront.

Bevorzugt ist vorgesehen, dass bei einer ermittelten Inkompatibilität eine Information an den Fahrer erfolgt. Dem Fahrer wird in einem solchen Fall, wenn sich die überstrichenen Flächen des aufzeichnenden und des Ego-Fahrzeugs stark unterscheiden, über eine geeignete Interaktions- und/oder Anzeigestrategie darauf hingewiesen, dass das System hohe Unsicherheiten bei der Umsetzung des aktuell bevorstehenden Fahrmanövers ermittelt hat. Dabei kann vorgesehen sein, die Inkompatibilität in einem Display beispielsweise grafisch hervorgehoben darzustellen oder es kann vorgesehen sein, dass der Fahrer während des Durchfahrens der Trajektorie optisch oder haptisch gewarnt wird. Die Information kann auch akustisch, beispielsweise durch eine Sprachausgabe, erfolgen. Auch eine Kombination aus akustischer, optischer und haptischer Warnung ist möglich.

Um das Fahrzeug bei der Durchführung eines Fahrmanövers jeweils rechtzeitig anhalten zu können, falls eine Kollision mit einem Objekt droht, oder dem Fahrer ausreichend Zeit für die Auswahl des nächsten Fahrmanövers einzuräumen und damit einen kontinuierlichen Systemablauf zu ermöglichen, werden die Fahrmanöver nur im Niedergeschwindigkeitsbereich durchgeführt. Das bedeutet, dass das Kraftfahrzeug eine maximale Geschwindigkeit von 30 km/h, bevorzugt von 8 km/h aufweisen darf, um das Fahrmanöver aktivieren zu können. Die maximal zulässige Geschwindigkeit, in der das System aktivierbar ist, hängt dabei stark von der verwendeten Umfeldsensorik und dem daraus resultierenden Sichtfeld des Fahrerassistenzsystems ab. Zur Absicherung können auch weitere Lokalisierungswerkzeuge, beispielsweise GPS-Informationen, eingesetzt werden, um eine Ausführung des Manövers auf nicht systemrelevanten Fahrbahnen zu vermeiden. Nicht systemrelevante Fahrbahnen sind alle Fahrbahnen, auf denen die Fahrmanöver nicht durchgeführt werden sollen, dies sind insbesondere Vorfahrtstraßen, Land- und Bundesstraßen sowie Autobahnen.

Um dem Fahrer eine hinreichende Unterstützung bei der Durchführung des Fahrmanövers zu geben und zu vermeiden, dass das Fahrzeug bei der semiautomatischen oder selbsttätigen Durchführung eines Fahrmanövers mit einem Objekt kollidiert, ist es weiterhin vorteilhaft, während der Durchführung des Fahrmanövers die Umgebung des Fahrzeugs mit Abstandssensoren zu erfassen. Wenn mit den Abstandssensoren ein Objekt detektiert wird, kann rechtzeitig eine Bremsung eingeleitet werden oder aber eine Neuberechnung erfolgen, um eine Kollision mit dem Objekt zu vermeiden. Als Abstandssensoren können beliebige, dem Fachmann bekannte Abstandssensoren eingesetzt werden. Üblicherweise verwendete Abstandssensoren sind zum Beispiel Ultraschallsensoren, Radarsensoren, Infrarotsensoren oder LIDAR-Sensoren. Als Mittel zur Lokalisierung können zum Beispiel GPS-Informationen oder Karten eingesetzt werden. Wenn mit den Abstandssensoren eine Annäherung an ein Objekt detektiert wird, ist es vorteilhaft, wenn das Fahrzeug automatisch angehalten wird, wenn erkannt wird, dass die Annäherung bei Fortsetzung des Fahrmanövers zu einer Kollision mit dem Objekt führen kann.

Eine Aktion des Fahrers, mit der das Fahrmanöver beendet werden kann, ist zum Beispiel das Betätigen der Bremse oder das Ausführen einer Lenkbewegung. Der Abbruch des Fahrmanövers durch den Fahrer ist insbesondere dann von Vorteil, wenn eine Kollision droht, die vom System nicht erfasst wird. In diesem Fall ist es möglich, dass durch den Fahrer das Fahrzeug noch rechtzeitig zum Stillstand gebracht werden kann. Neben dem Betätigen der Bremse und damit dem Anhalten des Fahrzeugs oder zusätzlich zum Betätigen der Bremse kann auch ein Gangwechsel die Aktion des Fahrers sein, durch die das Fahrmanöver beendet werden kann.

Erfindungsgemäß wird weiterhin ein Computerprogramm vorgeschlagen, gemäß dem eines der hierin beschriebenen Verfahren durchgeführt wird, wenn das Computerprogramm auf einer programmierbaren Computereinrichtung ausgeführt wird. Bei dem Computerprogramm kann es sich beispielsweise um ein Modul zur Implementierung eines Fahrassistenzsystems oder eines Subsystems hiervon in einem Fahrzeug handeln oder um eine Applikation für Fahrassistenzfunktionen, die auf einem tragbaren Gerät, wie beispielsweise einem Smartphone oder einem Tablet-PC, ausführbar ist. Das Computerprogramm kann auf einem maschinenlesbaren Speichermedium gespeichert werden, etwa auf einem permanenten oder wieder beschreibbaren Speichermedium oder in Zuordnung zu einer Computereinrichtung oder auf einer entfernbaren CD-ROM, DVD oder einem USB-Stick. Zusätzlich oder alternativ kann das Computerprogramm auf einer Computereinrichtung, wie etwa einem Server oder einem Cloud-System, zum Herunterladen bereitgestellt werden, zum Beispiel über ein Datennetzwerk, wie etwa das Internet, oder eine Kommunikationsverbindung, wie etwa eine Telefonleitung, oder eine drahtlose Verbindung.

Nach einem weiteren Aspekt der Erfindung wird ein Fahrassistenzsystem zur Unterstützung eines Fahrers bei einem Fahrmanöver vorgeschlagen, welches insbesondere zur Ausführung eines der zuvor beschriebenen Verfahren eingerichtet ist. Das Fahrassistenzsystem ist eingerichtet, zur Befolgung einer Trajektorie entweder dem Fahrer Anweisungen zur Durchführung von notwendigen Lenkeinstellungen und zur Längsführung zu geben oder die Lenkeinstellungen und gegebenenfalls die Längsführung automatisch durchzuführen, und umfasst eine Kommunikationseinheit, die zur Versendung und/oder zum Empfang einer Trajektorie für das Fahrmanöver, sowie bevorzugt zur Versendung und/oder zum Empfang von zusätzlichen fahrzeugspezifischer Merkmalen, wie Radstand, Wendekreis und/oder Fahrzeugkontur, kinematische Grenzparameter und Referenzpunkte des aufzeichnenden Fahrzeugs, oder Daten zu mittels Umfeldsensoren ermittelten befahrbaren Bereichen eingerichtet ist, und eine Einheit, die eingerichtet ist, eine Trajektorie bereitzustellen, die das Fahrassistenzsystem mittels der Kommunikationseinheit von einer vom Ego-Fahrzeug unabhängigen Einheit empfängt.

Nach einem weiteren Aspekt der Erfindung wird eine unabhängige Einheit zur Ausführung eines der zuvor beschriebenen Verfahren vorgeschlagen, welche eine Kommunikationseinheit aufweist, die zur Versendung und/oder zum Empfang einer Trajektorie, sowie bevorzugt zur Versendung und/oder zum Empfang von zusätzlichen fahrzeugspezifischer Merkmalen, wie Radstand, Wendekreis und/oder Fahrzeugkontur, kinematische Grenzparameter und Referenzpunkte des aufzeichnenden Fahrzeugs, und/oder Daten zu mittels Umfeldsensoren ermittelten befahrbaren Bereichen für das Fahrmanöver eingerichtet ist. Die unabhängige Einheit kann beispielsweise ein mobiles Gerät sein, welches an das Fahrzeug andockbar ist oder mit diesem in eine telemediale Kommunikation treten kann. Die unabhängige Einheit kann auch ein Fahrassistenzsystem eines weiteren Fahrzeugs sein oder ein mobiles Gerät, welches an einem weiteren Fahrzeug andockbar ist oder mit diesem in telemedialer Kommunikation steht. Die unabhängige Einheit kann alternativ hierzu in einer Station ortsfest verbaut sein, wobei die Station außerhalb des Fahrzeugs angeordnet ist. Beispielsweise kann die vom Ego-Fahrzeug unabhängige Einheit sich in einer Werkstatt oder an einem Drive-In-Schalter befinden. Die unabhängige Einheit kann insbesondere auch zur Nachrüstung von Systemkomponenten einsetzbar sein, die von Parkhausbetreibern, Supermärkten, Werk- oder Fertigungsstätten oder Drive-In-Schaltern verwendet werden. Das Rechnersystem, welches Teil der unabhängigen Einheit ist, übermittelt mit der Kommunikationsvorrichtung die Trajektorien an herannahende Fahrzeuge.

Nach einem weiteren Aspekt umfasst ein System zur Ausführung eines der oben beschriebenen Verfahren ein Fahrzeug, welches ein derartiges Fahrassistenzsystem aufweist, und eine derartige unabhängige Einheit.

### Vorteile der Erfindung

Das erfindungsgemäße Verfahren erlaubt die Nutzung einer zuvor abgespeicherten Trajektorie durch mehrere Fahrzeuge, beispielsweise auch Fahrzeuge, die anderen Fahrzeugtyps sind, als das Fahrzeug, auf welchem die Trajektorie eingefahren und aufgezeichnet wurde. Vorteilhaft werden Trajektorien einer alltäglich wiederkehrenden Fahrt, wie zum Beispiel das Manövrieren und Einparken in eine heimische Tiefgarage, in Parkhäusern, Supermarkparkplätzen, in Werk- oder Fertigungsstätten oder bei Drive-In-Schaltern abgespeichert und bei erneuter Anfahrt der Startposition der gespeicherten Trajektorie wird eine Fahrunterstützung, wie zum Beispiel eine automatische Querführung und/oder Längsführung zur Erreichung der Zielposition der abgespeicherten Trajektorie, auf weiteren Fahrzeugen bereitgestellt.

### Kurze Beschreibung der Zeichnungen

Ausführungsbeispiele der Erfindung sind in den Zeichnungen dargestellt und in der nachfolgenden Beschreibung näher erläutert.

Es zeigen
- Figur 1: zwei miteinander kommunizierende Fahrzeuge,
- Figur 2: eine Draufsicht auf eine Einparksituation und
- Figur 3: eine Draufsicht auf eine Situation mit einem Fahrzeug und einer Mediationseinheit.

### Ausführungsformen der Erfindung

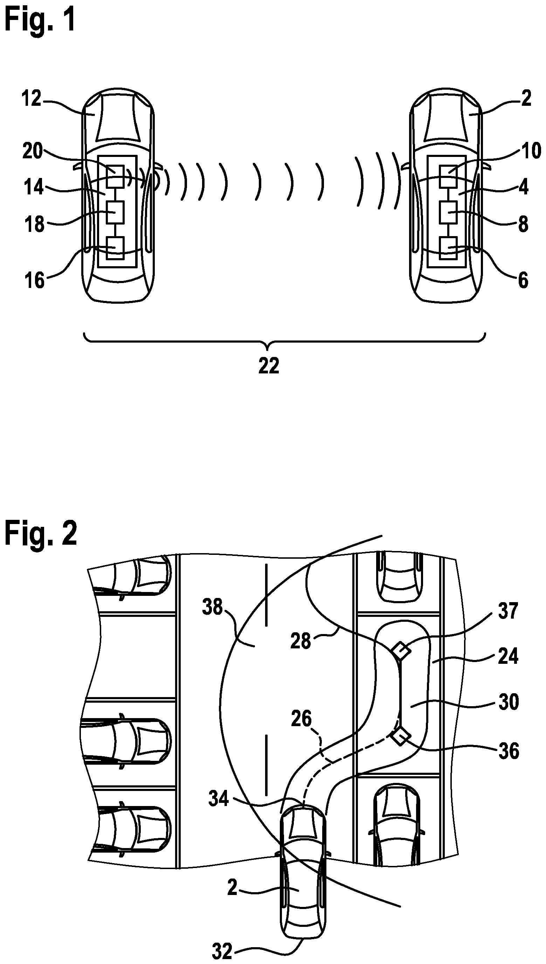

In der Figur 1 sind zwei miteinander kommunizierende Fahrzeuge 2, 12 dargestellt. Die Fahrzeuge 2, 12 bilden ein System 22, welches zur Ausführung der beschriebenen Verfahren eingerichtet ist. Ein Ego-Fahrzeug 2 umfasst ein Fahrassistenzsystem 4, welches eingerichtet ist, das erfindungsgemäße Verfahren auszuführen. Das Fahrassistenzsystem 4 umfasst Umfeldsensoren 6, welche Informationen über eine Umgebung des Ego-Fahrzeugs 2 bereitstellen. Weiterhin umfasst das Fahrassistenzsystem 4 eine Einheit 8 zur Bereitstellung von Trajektorien, welche im Allgemeinen dazu geeignet sein kann, anhand von Daten oder Messwerten der Umfeldsensorik 6 Trajektorien für Fahrmanöver zu berechnen, beispielsweise für Ein- und Ausparksituationen oder auch zur Engstellenassistenz.

Erfindungsgemäß umfasst das Fahrassistenzsystem 4 eine Kommunikationseinheit 10, die zur Versendung und/oder zum Empfang von Trajektorien für Fahrmanöver eingerichtet ist. Die Einheit 8 zur Bereitstellung von Trajektorien empfängt Daten und/oder Messwerte von der Kommunikationseinheit 10 und stellt Trajektorien bereit, die das Fahrassistenzsystem 4 mittels der Kommunikationseinheit 10 von einer vom Ego-Fahrzeug 2 unabhängigen Einheit, im dargestellten Ausführungsbeispiel vom weiteren Fahrzeug 12, empfängt.

Das weitere Fahrzeug 12 umfasst eine Umfeldsensorik 16 und ein Aufzeichnungsgerät 18, welches Daten und/oder Messwerte der Umfeldsensorik 16 empfängt und weiterverarbeitet. Das Aufzeichnungsgerät 18 ist eingerichtet, eine vom weiteren Fahrzeug 12 abgefahrene Trajektorie aufzuzeichnen, weiterzuverarbeiten und zu speichern. Insbesondere kann vorgesehen sein, dass die Trajektorie optimiert wird, hieraus ein Polygonzug ermittelt wird und dass weitere Daten, wie zum Beispiel fahrzeugspezifische Parameter oder eine vom Fahrzeug überstrichene Fläche gemeinsam mit der Trajektorie vom weiteren Fahrzeug 12 abgespeichert werden.

Das weitere Fahrzeug 12 umfasst eine Kommunikationseinheit 20, welche Daten vom Aufzeichnungsgerät 18 empfängt oder von diesem in einer Speichereinheit abgelegte Daten auslesen kann. Die Kommunikationseinheit 20 ist zur Versendung der abgespeicherten Trajektorie eingerichtet.

Figur 2 zeigt eine Draufsicht auf eine Situation mit dem Ego-Fahrzeug 2 und einem Parkplatz 24. Der Parkplatz 24 ist beispielsweise ein Privatparkplatz des Ego-Fahrzeugs 2, sodass hier eine stets wiederkehrende Strecke abgefahren werden muss, um auf den Parkplatz 24 zu gelangen. Dargestellt ist zwar eine Situation mit einer Längsparklücke, das erfindungsgemäße Verfahren ist aber natürlich auf Querparklücken und insbesondere auf Garagen übertragbar.

Ein Fahrassistenzsystem des Ego-Fahrzeugs 2 aktiviert in der Nähe des Parkplatzes 24 die Home-Zone-Funktion. Zur Aktivierung der Funktion kann beispielsweise vorgesehen sein, dass vom System erkannt wurde, dass sich das Fahrzeug in der Nähe der Parklücke 24 befindet, beispielsweise in einem Gebiet 37 um die Parklücke herum.

Dargestellt sind zwei Trajektorien 26, 28, welche auf den Parkplatz 24 führen. Es kann sein, dass eine der Trajektorien 26, 28 oder beide Trajektorien 26, 28 explizit Einpark- oder Ausparktrajektorien aus dem Parkplatz 24 sind. Die Trajektorien 26, 28 liegen dem Fahrassistenzsystem des Ego-Fahrzeugs 2 als Polygonzüge vor. Die Trajektorien 26, 28 wurden von einem weiteren Fahrzeug (nicht dargestellt) erstellt, abgespeichert und über die Kommunikationseinheit an das Ego-Fahrzeug 2 übertragen. Das Fahrassistenzsystem des Ego-Fahrzeugs 2 berechnet im dargestellten Ausführungsbeispiel aus der Trajektorie 26 einen Fahrschlauch 30, nämlich die Fläche, welche das Ego-Fahrzeug 2 bei Abfahren der Trajektorie 26 überstreicht. Die Trajektorien 26, 28 beziehen sich auf einen definierten Referenzpunkt des Fahrzeugs, beispielsweise auf den Mittelpunkt der Hinterachse 32 oder den Mittelpunkt der Vorderachse 34.

Bezugszeichen 36 und 37 markieren Zielpositionen der Trajektorien 26, 28, eine erste Zielposition 37 ist hier beispielhaft durch den Ort des Mittelpunkts der Vorderachse des weiteren Fahrzeugs angegeben, welches auf der Trajektorie 26 in die Parklücke 24 fuhr und eine zweite Zielposition 36 beispielhaft durch den Ort des Mittelpunkts der Hinterachse des weiteren Fahrzeugs angegeben, welches auf der Trajektorie 26 in die Parklücke 24 fuhr. Sollte der errechnete Fahrschlauch 30 zu einer Kollision führen, liegt eine Inkompatibilität vor, die dem Fahrer des Ego-Fahrzeugs 2 angezeigt werden kann oder die die Berechnung einer alternativen Trajektorie erfordert, welche kollisionsfreies Einparken auf dem Parkplatz 24 ermöglicht.

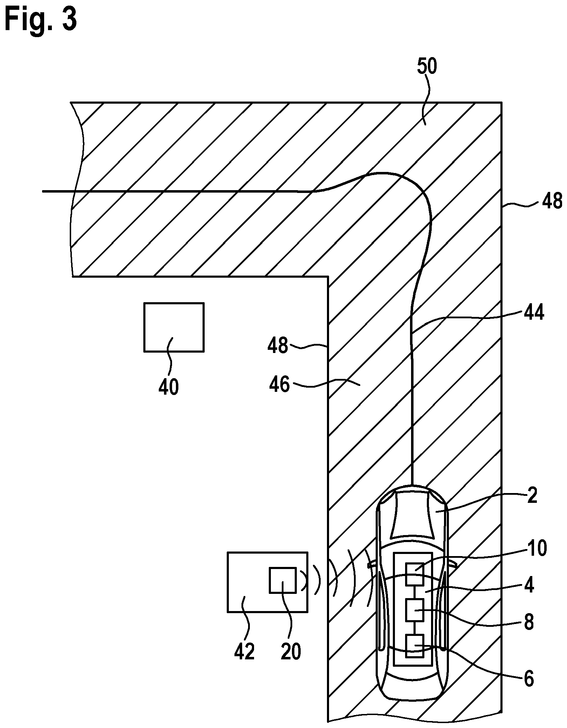

Figur 3 zeigt eine weitere Situation mit dem Ego-Fahrzeug 2 und einer Mediatoreinheit 42, die eine unabhängige Einheit im Rahmen der Erfindung bildet. Die Mediatoreinheit 42 umfasst eine Kommunikationseinheit 20, die zur Versendung einer Trajektorie für das Fahrmanöver eingerichtet ist. Im dargestellten Ausführungsbeispiel ist eine Trajektorie 44 vorgesehen, welche eine Passage durch einen seitlich eng begrenzten Korridor 46 bildet. Die dargestellte Situation liegt beispielsweise in Parkhäusern oder bei Drive-In-Schaltern vor. Das Fahrzeug muss möglichst nahe an einen Schalter 40 herangeführt werden. Durch ein weiteres Fahrzeug (nicht dargestellt) erfolgt ein Einprogrammieren einer optimalen Trajektorie 44, sowie gemäß einigen Ausführungsformen auch ein Einprogrammieren der überstreichbaren Bereich 50, die hier schraffiert dargestellt ist und durch eine seitliche Begrenzung 48 des Korridors 46 begrenzt wird. Die Trajektorie 44 und die überstreichbare Fläche 46 wird von der Kommunikationseinheit 20 des Mediators 42 an die Kommunikationseinheit 10 des Ego-Fahrzeugs 2 übertragen. Das Fahrassistenzsystem des Ego-Fahrzeugs 2 berechnet hieraus unter Berücksichtigung der fahrzeugspezifischen Parameter des Ego-Fahrzeugs den Fahrschlauch. Liegt eine Inkompatibilität vor, wird diese dem Fahrer des Ego-Fahrzeugs 2 angezeigt und/oder eine kollisionsfreie alternative Trajektorie berechnet.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Unterstützung eines Fahrers bei einem Fahrmanöver, bei dem zur Befolgung einer Trajektorie (26, 28, 44) entweder dem Fahrer von einem Fahrassistenzsystem (4) Anweisungen zur Durchführung von notwendigen Lenkeinstellungen und zur Längsführung gegeben werden oder die Lenkeinstellungen und gegebenenfalls die Längsführung von dem Fahrassistenzsystem (4) automatisch durchgeführt werden, wobei vom Fahrassistenzsystem (4) eine Trajektorie (26, 28, 44) bereitgestellt wird, die das Fahrassistenzsystem (4) mittels einer Kommunikationseinheit (10) von einer vom Ego-Fahrzeug (2) unabhängigen Einheit (12, 42) empfängt, **dadurch gekennzeichnet, dass** bei Ermittlung einer Inkompatibilität der empfangenen Trajektorie (26, 28, 44) mit fahrzeugspezifischen Parametern des Ego-Fahrzeugs (2) vom Fahrassistenzsystem (4) eine alternative Trajektorie (26, 28, 44) ermittelt und bereitgestellt wird.

2. Verfahren nach Anspruch 1, **dadurch gekennzeichnet, dass** die Trajektorie (26, 28, 44) von einem Fahrassistenzsystem (4) eines aufzeichnenden Fahrzeugs (12) in einem Speicher abgelegt wird.

3. Verfahren nach Anspruch 2, **dadurch gekennzeichnet, dass** die Trajektorie (26, 28, 44) mit fahrzeugspezifischen Parametern des aufzeichnenden Fahrzeugs (12) in dem Speicher abgelegt wird.

4. Verfahren nach Anspruch 2 oder 3, **dadurch gekennzeichnet, dass** das aufzeichnende Fahrzeug (12) einen überstreichbaren Bereich (50) ermittelt.

5. Verfahren nach Anspruch 1, **dadurch gekennzeichnet, dass** bei ermittelter Inkompatibilität eine Information an den Fahrer des Ego-Fahrzeugs (2) erfolgt.

6. Computergrogrammprodukt zur Ausführung eines der Verfahren nach einem der vorhergehenden Ansprüche, wenn das Computerprogramm auf einer programmierbaren Computereinrichtung ausgeführt wird.

7. Fahrassistenzsystem (4) zur Unterstützung eines Fahrers bei einem Fahrmanöver, insbesondere zur Ausführung eines der Verfahren nach einem der Ansprüche 1 bis 6, das eingerichtet ist, zur Befolgung einer Trajektorie (26, 28, 44) entweder dem Fahrer Anweisungen zur Durchführung von notwendigen Lenkeinstellungen und zur Längsführung zu geben oder die Lenkeinstellungen und gegebenenfalls die Längsführung automatisch durchzuführen, mit einer Kommunikationseinheit (10), die zum Empfang einer Trajektorie (26, 28, 44) für das Fahrmanöver eingerichtet ist, und mit einer Einheit (8), die eingerichtet ist, eine Trajektorie (26, 28, 44) bereitzustellen, die das Fahrassistenzsystem (4) mittels der Kommunikationseinheit (10) von einer vom Ego-Fahrzeug (2) unabhängigen Einheit (12, 42) empfängt.

8. Unabhängige Einheit (12, 42) zur Ausführung eines der Verfahren nach einem der Ansprüche 1 bis 6, aufweisend eine Kommunikationseinheit (10), die zur Versendung und/oder zum Empfang einer Trajektorie (26, 28, 44) für das Fahrmanöver eingerichtet ist.

9. System, insbesondere zur Ausführung eines der Verfahren nach einem der Ansprüche 1 bis 5, mit einem Fahrzeug, welches ein Fahrassistenzsystem (4) nach Anspruch 7 aufweist, und mit einer unabhängigen Einheit (12, 42) nach Anspruch 8.

## Claims

1. Method for assisting a driver during a driving manoeuvre, in which in order to follow a trajectory (26, 28, 44), instructions for the implementation of necessary steering settings and for longitudinal guidance are either issued to the driver by a driving assistance system (4), or the steering settings and, if appropriate, the longitudinal guidance are carried out automatically by the driving assistance system (4), wherein a trajectory (26, 28, 44) which the driving assistance system (4) receives by means of a communication unit (10) from a unit (12, 42) which is independent of the vehicle (2) in question is made available by the driving assistance system (4), **characterized in that** when an incompatibility of the received trajectory (26, 28, 44) with vehicle-specific parameters of the vehicle (2) in question is determined, an alternative trajectory (26, 28, 44) is determined by the driving assistance system (4) and made available.

2. Method according to Claim 1, **characterized in that** the trajectory (26, 28, 44) of a driving assistance system (4) of a recording vehicle (12) is stored in a memory.

3. Method according to Claim 2, **characterized in that** the trajectory (26, 28, 44) is stored with vehicle-specific parameters of the recording vehicle (12) in the memory.

4. Method according to Claim 2 or 3, **characterized in that** the recording vehicle (12) determines a region (50) which can be moved over.

5. Method according to Claim 1, **characterized in that** when incompatibility is determined information is issued to the driver of the vehicle (2) in question.

6. Computer program product for carrying out one of the methods according to one of the preceding claims when the computer program is carried out on a programmable computer device.

7. Driving assistance system (4) for assisting a driver during a driving manoeuvre, in particular for carrying out one of the methods according to one of Claims 1 to 6, which is configured, for the purpose of following a trajectory (26, 28, 44), either to issue the driver with instructions for the implementation of necessary steering settings and for longitudinal guidance or to carry out the steering settings and, if appropriate, the longitudinal guidance automatically, having a communication unit (10) which is configured to receive a trajectory (26, 28, 44) for the driving manoeuvre, and having a unit (8) which is configured to make available a trajectory (26, 28, 44) which the driving assistance system (4) receives, by means of the communication unit (10), from a unit (12, 42) which is independent of the vehicle (2) in question.

8. Independent unit (12, 42) for carrying out one of the methods according to one of Claims 1 to 6, having a communication unit (10) which is configured to transmit and/or receive a trajectory (26, 28, 44) for the driving manoeuvre.

9. System, in particular for carrying out one of the methods according to one of Claims 1 to 5, having a vehicle which has a driving assistance system (4) according to Claim 7, and having an independent unit (12, 42) according to Claim 8.

## Revendications

1. Procédé d'assistance apportée à un conducteur lors d'une manoeuvre de conduite, dans lequel, pour le respect d'une trajectoire (26, 28, 44), soit des indications sont donnés au conducteur par un système d'assistance à la conduite (4) pour exécuter des ordres de direction exigés et pour un guidage longitudinal, soit les ordres de direction ainsi que, le cas échéant, le guidage longitudinal, sont automatiquement effectués par le système d'assistance à la conduite (4), dans lequel le système d'assistance à la conduite (4) met à disposition une trajectoire (26, 28, 44), que le système d'assistance à la conduite (4) reçoit au moyen d'une unité de communication (10) en provenance d'une unité (12, 42) indépendante du véhicule concerné (2), **caractérisé en ce que**, lors de la détermination d'une incompatibilité de la trajectoire (26, 28, 44) reçue avec des paramètres spécifiques au véhicule du véhicule concerné (2), une variante de trajectoire (26, 28, 44) est déterminée et est mise à disposition par le système d'assistance à la conduite (4).

2. Procédé selon la revendication 1, **caractérisé en ce que** la trajectoire (26, 28, 44) est stockée dans une mémoire par un système d'assistance à la conduite (4) d'un véhicule (12) effectuant un enregistrement.

3. Procédé selon la revendication 2, **caractérisé en ce que** la trajectoire (26, 28, 44) est stockée dans la mémoire avec des paramètres spécifiques au véhicule du véhicule (12) effectuant l'enregistrement.

4. Procédé selon la revendication 2 ou 3, **caractérisé en ce que** le véhicule (12) effectuant l'enregistrement détermine une zone (50) pouvant être couverte.

5. Procédé selon la revendication 1, **caractérisé en ce qu'**une information est fournie au conducteur du véhicule concerné (2) lorsqu'une incompatibilité est déterminée.

6. Produit de programme d'ordinateur destiné à mettre en oeuvre l'un des procédés selon l'une quelconque des revendications précédentes, lorsque le programme d'ordinateur et exécuté sur un dispositif informatique programmable.

7. Système d'assistance à la conduite (4) destiné à assister un conducteur lors d'une manoeuvre de conduite, notamment destiné à mettre en oeuvre l'un des procédés selon l'une quelconque des revendications 1 à 6, qui, pour respecter une trajectoire (26, 28, 44), est conçu soit pour donner au conducteur des indications destinées à mettre en oeuvre des ordres de direction exigés et pour effectuer un guidage longitudinal soit pour mettre en oeuvre automatiquement les ordres de direction ainsi que, le cas échéant, le guidage longitudinal, comportant une unité de communication (10) qui est conçue pour recevoir une trajectoire (26, 28, 44) destinée à la manoeuvre de conduite, et comportant une unité (8) conçue pour fournir une trajectoire (26, 28, 44) que le système d'assistance à la conduite (4) reçoit, au moyen de l'unité de communication (10), en provenance d'une unité (12, 42) indépendante du véhicule concerné (2).

8. Unité autonome (12, 42) destinée à mettre en oeuvre un procédé selon l'une quelconque des revendications 1 à 6, comportant une unité de communication (10) qui est conçue pour émettre et/ou recevoir une trajectoire (26, 28, 44) pour la manoeuvre de conduite.

9. Système, notamment destiné à mettre en oeuvre un procédé selon l'une quelconque des revendications 1 à 5, comportant un véhicule qui comprend un système d'assistance à la conduite (4) selon la revendication 7, et comportant une unité autonome (12, 42) selon la revendication 8.
